Europäisches Patentamt

(19) European Patent Office

Office Européen des brevets

(11) Publication number: **0 221 381 B1**

# (12) EUROPEAN PATENT SPECIFICATION

(45) Date of publication of patent specification:
02.01.91 Bulletin 91/01

(51) Int. Cl.$^5$: **G01N 27/416**

(21) Application number: **86113890.7**

(22) Date of filing: **07.10.86**

(54) Electrochemical gas sensor.

(30) Priority: **06.11.85 US 795583**

(43) Date of publication of application:
**13.05.87 Bulletin 87/20**

(45) Publication of the grant of the patent:
**02.01.91 Bulletin 91/01**

(84) Designated Contracting States:
**DE GB**

(56) References cited:
**EP-A- 0 097 553**
**EP-A- 0 138 161**
**EP-A- 0 190 566**
**GB-A- 2 164 156**
**US-E- 31 916**
**JOURNAL OF THE ELECTROCHEMICAL
SOCIETY, vol. 109, no. 12, 1962, pages
1135-1138; M.W. BREITER et al.: "Dissolution
of oxygen layers on platinum in chloride
solutions"**

(73) Proprietor: **ENVIRONMENTAL
TECHNOLOGIES GROUP, INC.
1400 Taylor Avenue P.O. Box 9840
Baltimore, Maryland 21284-9840 (US)**

(72) Inventor: **Schmidt, John Calvin Allied
Corporation
P.O. Box 2445R Columbia Rd & Park Ave
Morristown, N.J. 07960 (US)**
Inventor: **Campbell, Donald Noble Allied
Corporation
P.O. Box 2445R Columbia Rd & Park Ave
Morristown, N.J. 07960 (US)**
Inventor: **Goetz, Scott Charles Allied
Corporation
P.O. Box 2445R Columbia Rd & Park Ave
Morristown, N.J. 07960 (US)**

(74) Representative: **Brock, Peter William et al
URQUHART-DYKES & LORD 91 Wimpole
Street
London W1M 8AH (GB)**

## Description

This invention relates to electrochemical gas sensors and more particularly to a sensor for sensing alkyl sulfides and lewisite in a gaseous environment.

EP-A-0190566 (published 13 August 1986 is directed to a three electrode sensor utilizing a nonaqueous electrolyte namely, N-methyl-2-pyrrolidone and a salt soluble therein.

EP-A-0138161 (published 24 April 1985) describes a three electrode gas sensor and a nonaqueous electrolyte N-methyl-2-pyrrolidone, with a conductive salt, such as tetrabutyl ammonium tetrafluoroborate.

U.S. Patent 3,776,832 to Oswin et al. which issued on December 4, 1973, and was reissued as re : 31,916 on June 18, 1985, describes a three electrode electrochemical gas sensor using an aqueous electrolyte which can be adapted to measure oxidizable or reducible gases, such as chlorine, CO, $Cl_2$ and hydrazine, as well as other gases. This particular known cell has two shortcomings. First, the aqueous electrolyte which has a limited service life due to evaporation of the electrolyte, and second, the temperature range within which the cell can operate is limited due to the possibility of freezing of the electrolyte.

The shortcomings noted above as a result of using an aqueous electrolyte have been recognized for some time. U.S. Patent 4,184,937, which issued on January 22, 1980, to H. Tataria et al. entitled "Electrochemical Cell for the Detection of Chlorine", describes a three electrode cell with a non-aqueous electrolyte consisting preferably of lithium perchlorate dissolved in an organic solvent selected from the group consisting of gamma-butyrolactone and propylene carbonate. The non-aqueous electrolyte has a considerably lower freezing point and vapor pressure than an aqueous electrolyte. The electrodes for use in the two or three electrode electrochemical cells are comprised of either gold or platinum black.

In U.S. Patent 4,201,634, which issued on May 6, 1980, to J. R. Stetter entitled "Method for the Detection of Hydrazine", a three electrode electrochemical cell is described using an aqueous alkaline electrolyte (KOH) in contact with the sensing electrode. The sensing electrode comprises a noble metal calayst bonded to a hydrophobic material to provide a diffusion electrode. The catalyst is described as rhodium or gold and the hydrophobic material is described as polytetrafluoroethylene.

It is possible to use an aqueous sensor of the type described in U.S. Patent 3,776,832 to detect chemical warfare agents such as mustard gas (di (2-chloroethyl) sulfide, designated HD). For example, a sensor containing a caustic aqueous electrolyte in contact with a gold sensing electrode has been used to detect the presence of HD. However, the aqueous electrochemical sensor has three disadvantages when used for the detection of HD. First, the sensor is slow ; it requires more than 30 minutes to reach its equilibrium current value at a given concentration of HD. The slow equilibration time is due to the fact that HD is not oxidized directly at the working electrode, but is converted to thiodiglycol in the electrolyte and then the alcohol functional group of the thiodiglycol is oxidized at the working electrode. The half life of the hydrolysis of HD to thiodiglycol is greater than five minutes. Secondly, the sensor suffers from numerous false alarms, since the aqueous HD sensor is sensitive to aliphatic alcohols, aldehydes, and several other gases in addition to alkyl sulfides. Third, the sensor has a relatively short life due to absorption of $CO_2$ from the air by the caustic electrolyte.

In a paper entitled "Diffusion Currents at Cylindrical Electrodes. A Study of Organic Sulfides." by M. M. Nicholson, J. Am. Chem Soc. 76 : 2539-2545, 1954, the author suggested that many dialkyl sulfides could be oxidized in methanolic HCl solutions. The high vapor pressure of methanol of 100 mm Hg at 21°C would result in a sensor with a reduced service life due to excessive electrolyte evaporation.

It is well established in the literature that dialkyl sulfides similar to HD can be oxidized to form the corresponding sulfoxides and sulfones.

In a publication by M. W. Breiter and J. L. Weininger entitled "Dissolution of Oxygen Layers on Platinum in Chloride Solutions", J. Electro Chem. Soc., 109(12) : 1135-1138, 1962, the dissolution of oxygen layers on platinum in dilute and concentrated chloride solutions is described.

The above-mentioned Breiter publication indicates that the oxygen layers are dissolved as the result of cathodic and anodic reactions in which cathodic reduction of oxygen and anodic dissolution of platinum occur simultaneously.

EP-A-0097553 describes an oxygen sensor having at least two electrodes in a liquid electrolyte that is electrochemically reactive with oxygen. The electrolyte is immobilized between the electrodes by a hydrophilic membrane. The electrolyte can be for example an aqueous solution of an alkali metal chloride, and the cathode can be a noble metal, such as platinum.

In the publication by J.A. Plambeck, published in Electro Analytical Chemistry, Wiley-Interscience, pages 50-51, New York, N.Y. (1982), a potentiestat is described for maintaining a sensing electrode of an electrochemical cell at a fixed potential with respect to its reference electrode.

It is therefore desirable to use an electrolyte in the electrochemical gas sensor which permits direct oxidation of alkyl sulfides, thereby providing a fast response time.

It is further desirable to provide an electrolyte in an electrochemical gas sensor which improves the detection and specificity of alkyl sulfides.

It is further desirable to provide an electrolyte which evaporates slowly due to a low vapor pressure to extend the life of the electrochemical gas sensor.

It is further desirable to use an electrolyte which has a low freezing temperature to permit sensing down to the freezing temperature.

It is further desirable to use an electrolyte which is not degraded by CO uptake from the air.

This invention provides apparatus for detecting alkyl sulfides, di-(2-chloroethyl) sulfide (HD) or 2-chlorovinyl dichloroarsine (Lewisite), in a gaseous environment which comprises a sensing electrode having a bare surface including platinum not covered with platinum oxide in contact with an electrolyte including a solution of ethylene glycol, water and a halide, means for exposing said electrolyte to said gaseous environment, a reference electrode in contact with said electrolyte and means for maintaining the potential of said reference electrode.

This invention also provides the use of apparatus as defined above in a method for detecting compounds selected from alkyl sulfides, di-(2-chloroethyl) sulfide (HD) and 2-chlorovinyl dichloroarsine (Lewisite) in a gaseous environment which comprises exposing the electrolyte in said cell to said gaseous environment, reference electrode in contact with said electrolyte, and maintaining the potential of said sensing electrode with respect to the potential of said reference electrode, whereby said compounds are oxidized at the bare surface including platinum.

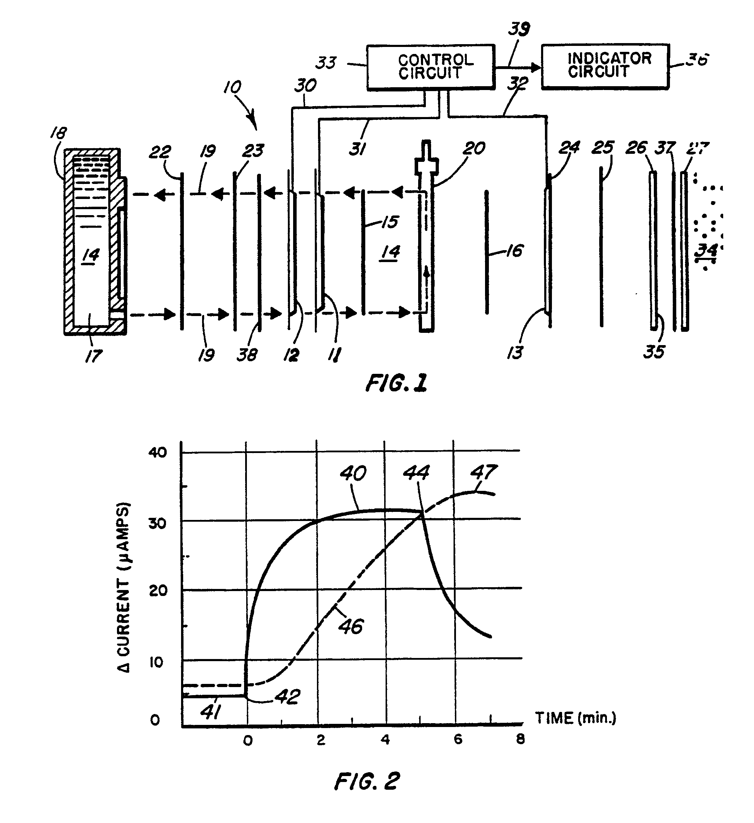

The invention is further described with reference to the accompanying drawings, in which Fig. 1 is a schematic diagram of one embodiment of the invention.

Fig. 2 is a graph showing the response of the embodiment of Fig. 1 and of a prior art sensor to di (2-chloroethyl) sulfide, designated HD as a function of time.

Fig. 3 is a graph showing the response of an experimental laboratory cell to di (2-chloroethyl) sulfide (HD) as a function of the sensing electrode voltage.

Fig. 4 is a graph showing the response of a laboratory electrochemical cell in the absence of HD as a function of the sensing electrode voltage.

Fig. 5 is a graph showing the response of a laboratory electrochemical cell in the absense of HD as a function of the sensing electrode voltage.

Referring to Fig. 1, an electrochemical gas sensor 10 is shown. Electrochemical gas sensor 10 includes a reference electrode 11, a counter electrode 12 and a sensing electrode 13. Sensing electrode 13 may be attached to one side of a porous membrane 24 which may be for example tetrafluoroethylene. The other side of membrane 24 is exposed to the gaseous environment 34 to be monitored. Sensing electrode 13 may be for example a platinum wire mesh, a layer of platinum vacuum sputtered directly on to membrane 24, or a composite structure fabricated by sintering a mixture of platinum powder and small polytetrafluoroethylene (PTFE) particles to membrane 24. Reference electrode 11, counter electrode 12, and sensing electrode 13 are spaced apart from each other and in contact with electrolyte 14. Contact may be maintained by means of filter paper 15 and 16, which may be fiberglass filter paper wetted with electrolyte 14. Reference electrode 11 and counter electrode 12 may be positioned edge to edge to one another (side by side) and attached to one surface of membrane 38. Membrane 38 may be attached or heat sealed to electrode spacer 20.

Electrolyte 14 may be supplied from reservoir 17 having a housing 18. A wick 19 may furnish a fluid path for electrolyte 14 from reservoir 17 to electrodes 11-13 and filter papers 15 and 16. Electrolyte 14 comprises a solution of ethylene glycol, water, and a halide salt or acid. For example, electrolyte 14 may be a solution of ethylene glycol and water at a ratio of 60 to 40 including a halide such as 0.05 M to 2.0 M hydrocloric acid. 1.0M was found to be the optimum HCl concentration. The ratio of ethylene glycol to water of 60 :40 was optimum for low vapor pressure ; other ratios may also be used. The above electrolyte has a freezing temperature of -80°F (-62°C) and a vapor pressure of less than 0.1 mm Hg (13.3 Pa) when the hydrochloric acid in the electrolyte has a concentration of 0.2 M.

It is well known in the art that ethylene glycol may be expressed by the following chemical formula : $CH_2OHCH_2OH$. The ethylene glycol component in electrolyte 14 solution functions to lower the vapor pressure and the freezing temperature. The halide component in electrolyte 14 functions as a supporting electrolyte by providing ions to carry electronic charge between electrodes and functions to inhibit the formation of oxides of the platinum metal at times when the platinum metal is a anodic potential. Halides are, for example, a binary compound of a halogen with a more electropositive element or radical. Typical compounds would include the fluorides, chlorides, bromides and iodides. An electrolyte consisting of an aqueous HCl solution may be used but appears to be less desirable than an aqueous-glycol HCl solution. Reference electrode 11 and counter electrode 12 may also include a platinum layer, disk, wire or mesh, or include an alloy of platinum or a platinum metal. A suitable alloy of platinum may include ruthenium, osmium, rhodium, iridium and palladium or mixtures thereof.

As shown in Fig. 1 electrochemical gas sensor 10 also includes a gasket 22, a polypropylene (PPE) membrane 23, a gasket 25 and metal frame 26. A convection barrier 27 which may, for example, be tetrafluoroethylene functions to reduce sensor noise caused by convection in the ambient gas. The various elements shown in Fig. 1 may be assembled as shown and positioned much closer together, so that the wide spaces shown in Fig. 1 do not occur in the assembled electrochemical gas sensor 10. In fact, electrical contact from electrodes 11-13 may be made by means of electrode spacer 20 to respective leads 30-32. A control circuit 33 is coupled to leads 30-32 to provide a predetermined voltage on sensing electrode 13 with respect to reference electrode 11. Typically, control circuit 33 performs this function by providing current to counter electrode 12 which travels through the electrolyte 14 to sensing electrode 13. Control circuit 33 may be a temperature compensated potentiostat, well known in the art. Control circuit 33 may include circuitry to provide differential pulse voltammetric (DPV) sensing. Control circuit 33 also functions to measure the current passing between sensing electrode 13 and counter electrode 12. The current is normally proportional to the concentration of a selected gas, for example, di (2-chloroethyl) sulfide (HD) in the ambient 34. An output of control circuit 33 is coupled over lead 39 to indicator circuit 36, which display provides an indication of or a concentration of HD or LEWISITE.

In operation, ambient gas 34 passes through convection barrier 27 through a hole 35 in metal frame 26 and gasket 25 through porous membrane 24 and through thin layer of electrolyte 14 to sensing electrode 13. A permselective membrane 37, which is permeable to certain gases, may be utilized between convection barrier 27 and porous membrane 24.

Fig. 2 is a graph showing the change in output current from sensing electrode 13 on lead 32 as a function of time before and after electrochemical gas sensor 10 is exposed to low levels of HD. In Fig. 2 the ordinate represents change in current in microamperes and the abscissa represents time in minutes. Curve 40 shows the response of electrochemical gas sensor 10 to ambient gas 34 having two parts per million of di (2-chloroethyl) sulfide, HD. Curve portion 41 of curve 40 represents when no HD was present in ambient gas 34. At point 42, corresponding to about 0 minutes, HD was introduced into ambient gas 34 at a concentration of approximately two parts per million. At point 44 on curve 40, HD was removed from ambient gas 34 which corresponds to about 5 minutes. As shown in Fig. 2, curve 40 rises to a value of 29 microamps in 2 minutes.

Fig. 2 also shows curve 46 which is the response of a prior art electrochemical gas sensor utilizing gold electrodes and having an aqueous caustic electrolyte of 5% potassium hydroxide (KOH) in water. Curve 46 represents the response to two parts per million of HD in the ambient gas at time zero. After six minutes the sensor has a response of 36 microamps. The sensor is slow ; it requires more than 30 minutes to reach its equilibrium current value at a given concentration of HD. The slow equilibration time is due to the fact that HD is not oxidized directly at the working electrode, but is converted to thiodiglycol in the electrolyte and the thiodiglycol is oxidized at the working electrode. Curve portion 47 at 7 minutes represents the decrease in output from the electrochemical gas sensor in response to the removal of HD at 5 minutes.

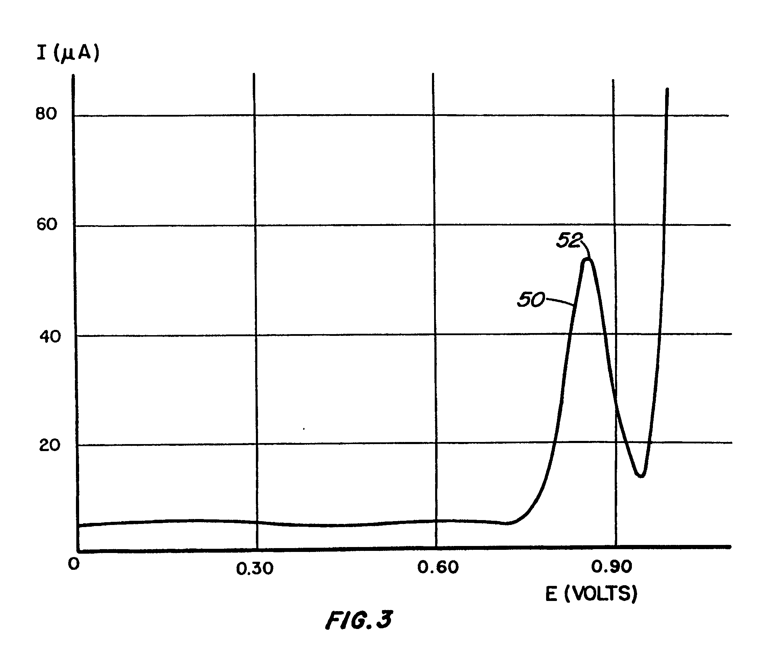

Fig. 3 shows the response of a laboratory electrochemical cell to pure liquid agent HD as a function of the voltage on the sensing electrode using DPV sensing. The laboratory cell used herein was a Model EC-219, manufactured by the IBM Corporation, Armonk, New York. In Fig. 3 the ordinant represents current in microamperes and the abscissa represents the voltage of the sensing electrode with respect to a saturated calomel reference electrode (SCE). The counter electrode was a platinum wire and the sensing electrode was a platinum disk. The electrolyte included a solution of ethylene glycol, water, (in a ratio 60 :40), and 1.0 M of hydrochloric acid. Agent HD was introduced into the electrolyte with a syringe.

In Fig. 3, curve 50 shows the output from the sensing electrode as the voltage on the sensing electrode is raised from 0 to .95 volts. As shown in Fig. 3 oxidation peak for HD occurs at 0.87V shown by curve portion 52.

Experimental laboratory cells such as the IBM EC-219 are typically used by those skilled in the art to study, in detail, the reactions which take place in an electrochemical sensor.

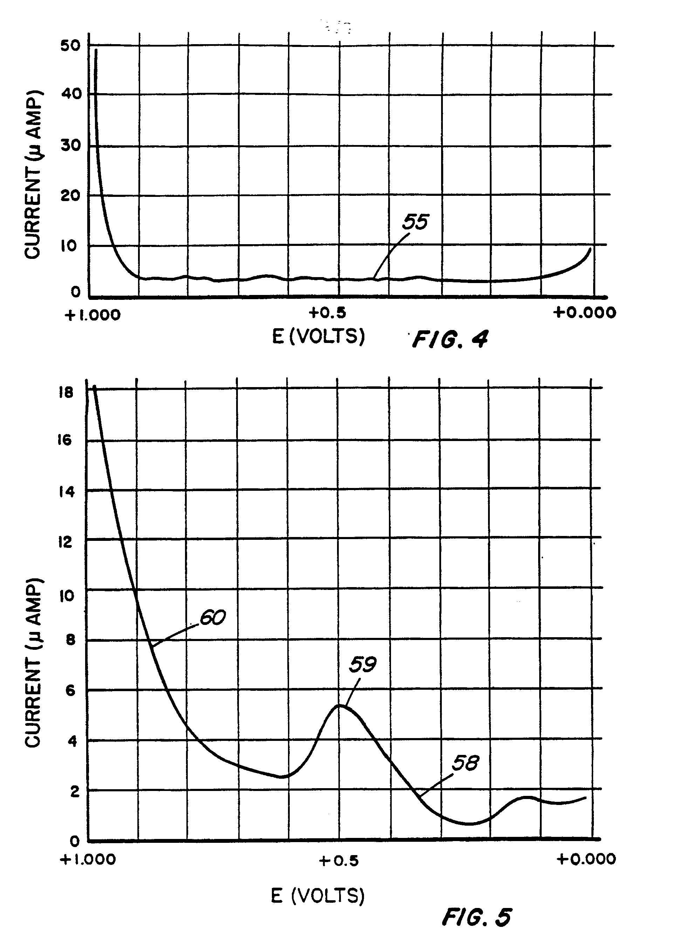

Fig. 4 shows the response of the laboratory electrochemical cell as described above (Fig. 3) in total absence of agent HD as a function of the voltage on the sensing electrode using DPV sensing. In Fig. 4 the ordinate represents current in microamperes and the abscissa represents the voltage of the sensing electrode with respect to a saturated calomel reference electrode (SCE). No significant current flows between 0.0-0.9V in the absence of HD as shown by curve 55.

Fig. 5 shows the response of the laboratory electrochemical cell in the absence of HD as described above, except the electrolyte included a solution of ethylene glycol, water, (in ratio 60 :40), and 1.0 M of sulfuric acid, $H_2SO_4$, a typical non-halide electrolyte. In Fig. 5 the ordinate represents current in microamperes and the abscissa represents the voltage of the sensing electrode with respect to a saturated calomel reference electrode (SCE). Significant background current flows between 0.0-0.9V in the absence of HD as shown by curve 58. A background current peak occurs at 0.49V as shown by curve portion 59. The background current increases substantially above .8V as shown by curve portion 60.

The current peak at 0.49V is believed due to the oxidation of the platinum sensing electrode surface. This current peak has two deleterious effects if this electrolyte containing $H_2SO_4$ is used in electrochemical gas sensor 10 shown in Fig. 1. First, the current peak at 0.49V would cause a large initial current in the absence of HD if electrochemical gas sensor 10 is set at 0.87V to detect HD. The large initial current in the absence of HD would reduce the accuracy of the HD measurement significantly, since the large initial current must be subtracted from the total current to determine the current due to HD. Also, since the background current fluctuates with several environmental conditions, it cannot be subtracted accurately. Second, the reaction responsible for the 0.49V current peak will result in a slow build up of platinum oxide on the surface of the sensing electrode of electrochemical gas sensor 10 set at 0.87V to detect HD. Since HD is only detected on a bare platinum electrode surface, not one covered with platinum oxide, a sensor set at 0.87V vs. SCE to detect HD will slowly fail as its sensing electrode is deactivated. Similar problems have occurred when other non-halide electrolytes, such as phosphoric and nitric acids, were tested. The halide is believed to inhibit the formation of platinum oxides which form on platinum electrodes in non-halide electrolytes at high anodic potentials. This phenomenon was investigated for chlorides in a publication by M. W. Breiter and J. L. Weininger, entitled "Dissolution of Oxygen Layers on Platinum in Chloride Solutions", supra.

The specificity of electrochemical gas sensor 10 with electrolyte 14 is a major improvement over prior art HD sensors. A summary of the response of electrochemical gas sensor 10 to HD, as well as to 15 common interferents, is found in Table 1.

## TABLE 1

| Test Gas | Concentration Tested | Average Response |
|---|---|---|
| Agent HD | 10 ug/l | 24 uA |
| Acetaldehyde | sat. vapor | 10 uA |
| Acetic Acid | sat. vapor | none |
| Acetone | sat. vapor | 4 uA |
| Ammonia | 230 ppm | sl. negative |
| Butyl amine | sat. vapor | 40 uA |
| Carbon monoxide | 53 ppm | none |
| Carbon dioxide | 100 percent | sl. negative |
| Ethanol | sat. vapor | none |
| Ethyl ether | sat. vapor | none |
| Ethyl phthalate | sat. vapor | 2 uA |
| Hydrogen cyanide | 75 ppm | sl. negative |
| Hydrogen sulfide | 20 ppm | 20 uA |
| Isopropanol | sat. vapor | 5 uA |
| Nitrogen dioxide | 50 ppm | none |
| Sulfur dioxide | 10 ppm | 4 uA |

The alcohols, acetone, and ethylene generate strong signals in prior art aqueous sensors, but do not effect the electrochemical gas sensor 10 with electrolyte 14. This is a major advance, since these materials, especially the aliphatic alcohols, are normally present in many situations where HD is a threat.

Table 2 shows the interference rejection of electrochemical gas sensor 10 which is set to alarm at 10 ug/l HD to the 15 interference listed in Table 1. In Table 2 the words "will not alarm" represents that the interferent will not alarm at its saturated vapor pressure at 20°C temperature.

## TABLE 2

| Gas | Concentration For False Alarm (ppm) |
|---|---|
| Acetaldehyde | Will not alarm |
| Acetic Acid | Will not alarm |
| Acetone | Will not alarm |
| Ammonia | Will not alarm |
| Butyl Amine | 79,000 |
| Carbon dioxide | Will not alarm |
| Carbon monoxide | Will not alarm |
| Ethanol | Will not alarm |
| Ethyl ether | Will not alarm |
| Hydrogen cyanide | Will not alarm |
| Hydrogen sulfide | 24 |
| Isopropanol | Will not alarm |
| Nitrogen dioxide | Will not alarm |
| Sulfur dioxide | 60 |

An electrochemical gas sensor has been described for detecting selected compounds in a gaseous environment comprising a sensing electrode including platinum or a platinum alloy in contact with an electrolyte, a reference electrode in contact with the electrolyte, and means for maintaining the potential of the sensing electrode with respect to the potential of the reference electrode, wherein the electrolyte includes a solution of ethylene glycol, water, and a halide, for example hydrochloric acid, whereby the selected compounds are oxidized at the sensing electrode. An alternate electrolyte includes water and a halide. The sensor is useful for detecting low levels, for example, 2 parts per million (2 PPM) of alkyl sulfides, di (2-chloroethyl) sulfide (HD) and 2-chlorovinyldichloroarsine (LEWISITE).

## Claims

1. Apparatus for detecting alkyl sulfides, di-(2-chloroethyl) sulfide (HD) or 2-chlorovinyl dichloroarsine (Lewisite) in a gaseous environment (34) which comprises a cell (10) having a sensing electrode (13) having a bare surface including platinum not covered with platinum oxide in contact with an electrolyte (14), means for exposing said electrolyte (14) to said gaseous environment (34), a counter electrode (12), a reference electrode (11) in contact with said electrolyte (14), and means (33) for maintaining the potential of said sensing electrode (13) with respect to the potential of said reference electrode (11), characterized in that said electrolyte (14) comprises a solution of ethylene glycol, water, and a halide,

2. Apparatus according to Claim 1 characterized in that said halide includes hydrochloric acid in the range from 0.05 to 2.0 M.

3. Apparatus according to Claim 1 or characterized in that said electrolyte (14) comprises 3 parts of ethylene glycol to 2 parts of water.

4. Apparatus according to any one of claims 1 to 3 characterized in that said sensing electrode (13) comprises a platinum alloy.

5. Use of apparatus according to any one of Claims 1 to 4 in a method for detecting compounds, selected from alkyl sulfides, di(2-chloroethyl) sulfide (MD) and 2-chlorovinyl dichloroarsine (Lewisite) in a gaseous environment which comprises exposing the electrolyte (14) in said cell (10) to said gaseous environment (34), and maintaining the potential of said sensing electrode (13) with respect to the potential of said reference electrode (11), whereby said compounds are oxidized at the above surface including platinum.

## Ansprüche

1. Vorrichtung zum Nachweisen von Alkylsulfiden, Di-(2Chlorethyl)sulfid(HD) oder 2-Chlorvinyldichlorarsin (Lewisit) in einer gasförmigen Umgebung (34), die eine Zelle (10) aufweist, welche eine Fühlerelektrode mit einer freiliegenden, nicht durch Platinoxyd abgedecktes Platin enthaltenden Oberfläche in Berührung mit einem Elektrolyten (14) besitzt, eine Einrichtung, um den Elektrolyten (14) der gasförmigen Umgebung (34) auszusetzen, eine Zählelektrode (12), eine Bezugselektrode (11) in Berührung mit dem Elektrolyten (14), sowie eine Einrichtung (33), um das Potential der Fühlerelektrode (13) bezüglich des Potentials der Bezugselektrode (11) aufrechtzuerhalten, dadurch gekennzeichnet, daß der Elektrolyt (14) aus einer Lösung von Äthylenglykol, Wasser und einem Halogenid besteht.

2. Vorrichtung nach Anspruch 1, dadurch gekennzeichnet, daß das Halogenid Salzsäure im Bereich von 0,05 bis 2,0 mol enthält.

3. Vorrichtung nach Anspruch 1 oder dadurch gekennzeichnet, daß der Elektrolyt (14) 3 Teile Äthylenglykol auf 2 Teile Wasser enthält.

4. Vorrichtung nach einem der Ansprüche 1 bis 3, dadurch gekennzeichnet, daß die Fühlerelektrode (13) eine Platinlegierung enthält.

5. Verwendung der Vorrichtung nach einem der Ansprüche 1 bis 4 in einem Verfahren zum Nachweisen von Verbindungen, die ausgewählt sind aus Alkylsulfiden, Di-(2-Chlorethyl)sulfid und 2-Chlorvinyldichlorarsin (Lewisit), in einer gasförmigen Umgebung, bei welchem der Elektrolyt (14) in der Zelle (10) der gasförmigen Umgebung (34) ausgesetzt und das Potential der Fühlerelektrode (13) in bezug auf das Potential der Bezugselektrode (11) aufrechterhalten wird, wodurch die Verbindungen an der genannten, Platin enthaltenden Oberfläche oxydiert werden.

## Revendications

1. Appareil pour détecter les sulfures d'alkyle, le sulfure de di-(2-chloroéthyle) (HD) ou la 2-chlorovinyldichloroarsine (Lewisite) dans un environnement gazeux (34) qui comprend une cellule (10) comportant une électrode de détection (13) ayant une surface nue renfermant du platine non recouverte d'oxyde de platine en contact avec un électrolyte (14), un moyen pour exposer ledit électrolyte (14) audit environnement gazeux (34), une contre-électrode (12), une électrode de référence (11) en contact avec ledit électrolyte (14), et un moyen (33) pour maintenir le potentiel de ladite électrode de détection (13) par rapport au potentiel de ladite électrode de référence (11), caractérisé en ce que ledit électrolyte (14) comprend une solution d'éthylèneglycol, d'eau et d'un halogénure.

2. Appareil selon la revendication 1, caractérisé en ce que ledit halogénure renferme de l'acide chlorhydrique dans l'intervalle de 0,05 à 2,0M.

3. Appareil selon la revendication 1 ou 2, caractérisé en ce que ledit électrolyte (14) comprend 3 parties d'éthylèneglycol pour 2 parties d'eau.

4. Appareil selon l'une quelconque des revendications 1 à 3, caractérisé en ce que ladite électrode de détection (13) comprend un alliage du platine.

5. Utilisation de l'appareil selon l'une quelconque des revendications 1 à 4 dans un procédé de détection de composés choisis parmi les sulfures d'alkyle, le sulfure de di-(2-chloroéthyle) (HD) et la 2-chlorovinyldichloroarsine (Lewisite) dans un environnement gazeux, qui comprend l'exposition dudit électrolyte (14) dans ladite cellule (10) audit environnement gazeux (34) et le maintien du potentiel de ladite électrode de détection (13) par rapport au potentiel de ladite électrode de référence (11), dans laquelle lesdits composés sont oxydés sur la surface renfermant du platine ci-dessus.

FIG. 1

FIG. 2

FIG.3

FIG. 4

FIG. 5